(19) Europäisches Patentamt / European Patent Office / Office européen des brevets

(11) **EP 4 297 139 A1**

(12) **EUROPEAN PATENT APPLICATION**
published in accordance with Art. 153(4) EPC


(43) Date of publication:
**27.12.2023 Bulletin 2023/52**

(21) Application number: **22908813.3**

(22) Date of filing: **19.01.2022**

(51) International Patent Classification (IPC):
***H01M 10/0525*** *(2010.01)* ***H01M 10/42*** *(2006.01)*
***H01M 50/449*** *(2021.01)*

(52) Cooperative Patent Classification (CPC):
**H01M 10/0525; H01M 10/42; H01M 50/449;**
Y02E 60/10

(86) International application number:
**PCT/CN2022/072744**

(87) International publication number:
**WO 2023/137624 (27.07.2023 Gazette 2023/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Contemporary Amperex Technology Co., Limited**
**Fujian 352100 (CN)**

(72) Inventor: **XIE, Haotian**
**Ningde, Fujian 352100 (CN)**

(74) Representative: **Gong, Jinping**
**CocreateIP**
**Neumarkterstr. 21**
**81673 München (DE)**


(54) **SECONDARY BATTERY, BATTERY MODULE, BATTERY PACK, AND ELECTRICAL APPARATUS**


(57) The present application provides a secondary battery, which can improve the utilization efficiency of a lithium supplement and thus the discharge capacity when a specific lithium supplement is used, and further reduce the thermal shrinkage of the separator to improve its working stability, thereby improving the safety performance and service life. The secondary battery includes a positive electrode plate, a negative electrode plate, a separator and an electrolyte solution, as well as at least one selected from the substances represented by the general formula (I) below as a lithium supplement, wherein the separator comprises a separator substrate and an additive (A), which is selected from any one or two or more of nitrone derivatives having a structure represented by the formula (II) below in the molecule, or piperidine derivatives having a structure represented by the formula (III) below in the molecule.

$$mLi_{x1}O \cdot n(Ni_{y1}Mn_{y2}Co_{y3}Cu_{y4}Fe_{y5})O \qquad (I)$$

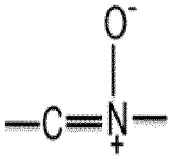

(II)


EP 4 297 139 A1

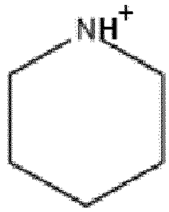

(III)

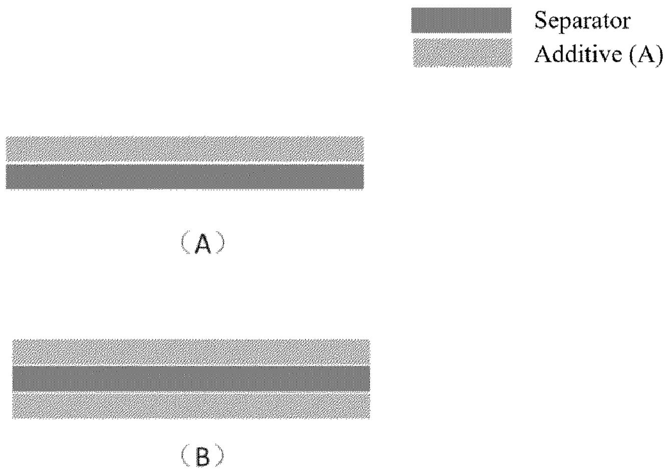


*FIG. 1*

## Description

### Technical Field

The present application relates to the technical field of secondary batteries, and in particular to a secondary battery, a battery module, a battery pack and a power consuming device.

### Background Art

In recent years, with the increasing application range, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycle performance, safety performance, etc.

A secondary battery is generally composed of a positive electrode, a negative electrode, a separator, and an electrolyte solution, etc. For example, in an lithium-ion secondary battery, charge transfer is usually achieved by means of the deintercalation of lithium ions in positive and negative electrodes, followed by the transfer of lithium ions by the electrolyte in an electrolyte solution, such that chemical energy and electric energy can be mutually converted. A separator is provided between a positive electrode plate and a negative electrode plate, and mainly prevents the positive and negative electrodes from short-circuiting and enables ions to pass through. Because of the position of the separator, it plays a very important role in both realizing the operation purpose of the secondary battery and ensuring the working safety of the secondary battery. Therefore, the performances of the secondary battery, such as energy density, cycle performance and safety performance, can be further improved by studying and improving the design of the separator.

In addition, in the prior art, in order to make up for the loss of recyclable lithium due to a large amount of lithium source consumption caused by the formation of a solid electrolyte film layer (SEI) on the surface of the negative electrode during the first charging process, lithium pre-supplementing is generally carried out by adding a lithium supplement in the secondary battery. However, during the charging and discharging process, different lithium supplements will undergo various metal valence changes or side reactions with electrolyte solutions etc., which may reduce their actual utilization efficiency. Therefore, the existing positive electrode pre-supplementing lithium technologies still need to be improved.

### Summary of the Invention

The present application is carried out in view of the above-mentioned technical problems, and an object of the present application is to provide a secondary battery, which can improve the utilization efficiency of a lithium supplement and thus the discharge capacity when a specific lithium supplement is used, and further improve the performances, such as the strength, of the separator, thereby improving the safety performance and service life.

In order to achieve the above-mentioned object, from the perspective of separator design, by comprising a specific additive in the separator of a secondary battery using the specific lithium supplement, the present invention not only reduces the thermal shrinkage of the separator and improves the overcharge prevention performance of the secondary battery, but also can improve the utilization efficiency of the specific lithium supplement, thereby achieving the above-mentioned object.

A first aspect of the present application provides a secondary battery, which comprises a positive electrode plate, a negative electrode plate, a separator and an electrolyte solution. The secondary battery contains a lithium supplement selected from at least one of the substances represented by the general formula (I) below,

$$mLi_{x1}O\cdot n(Ni_{y1}Mn_{y2}Co_{y3}Cu_{y4}Fe_{y5})O \qquad (I)$$

In general formula (I), $1 \le x1 \le 2$; $0 \le y1 \le 1$; $0 \le y2 \le 1$; $0 \le y3 \le 1$; $0 \le y4 \le 2$; $0 \le y5 \le 1$; $0.5 \le y1 + y2 + y3 + y4 + y5 \le 1$; $1 \le m \le 3$; $0 \le n/m \le 1$,

and the separator comprises a separator substrate and an additive (A), wherein the additive (A) is selected from any one or two or more of nitrone derivatives having a structure represented by the formula (II) below in the molecule, or piperidine derivatives having a structure represented by the formula (III) below in the molecule.

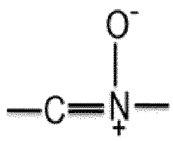

(II)

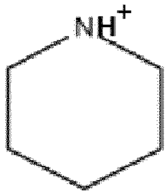

(III)

Therefore, the above-mentioned additive (A) not only reduces the thermal shrinkage of the separator, which makes the separator more stable in operation, and improves the overcharge prevention performance of the secondary battery, thereby improving the safety performance of the secondary battery, and can also improve the utilization efficiency of the above-mentioned specific lithium supplement, thereby improving the charge/discharge capacity and service life of the secondary battery.

In any embodiment, the molar content N1 of the above-mentioned lithium supplement and the molar content N2 of the above-mentioned additive (A) satisfy the following relational expression: $0.1 \leq N2/(N1 \times m \times x1) \leq 0.5$; optionally, N1 and N2 satisfy the following relational expression: $0.27 \leq N2/(N1 \times m \times x1) \leq 0.35$.

Therefore, the side reaction caused by the migration of lithium ions of the lithium supplement can be effectively reduced, and the utilization efficiency of the lithium supplement can be further improved.

In any embodiment, the above-mentioned lithium supplement is selected from at least one of $Li_2O$, $Li_2O_2$, $Li_5FeO_4$, and $Li_2Cu_{0.5}Ni_{0.5}O_2$; optionally, the lithium supplement is selected from at least one of $Li_2O$ and $Li_2O_2$. Therefore, it can not only make up for the loss of recyclable lithium due to a large amount of lithium source consumption caused by the formation of a solid electrolyte film layer (SEI) on the surface of the negative electrode during the first charging process, but also further improve the utilization efficiency of the separator by adding the additive (A) thereto, thereby further improving the charge/discharge capacity and the service life of the secondary battery.

In any embodiment, the nitrone derivatives are compounds represented by the general formula (II') below, or cyclic nitrone derivatives with 4-8 membered rings,

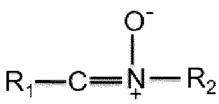

(II')

in formula (II'), $R_1$ and $R_2$ are each independently selected from at least one of methyl, ethyl, propyl, isopropyl, butyl, isobutyl, tert-butyl, fluoromethyl, fluoroethyl, fluoropropyl, methylhydroxy, ethylhydroxy, phenyl, tolyl, fluorophenyl, methoxy, and ethoxy, 1,1-dimethyl-ethanol group, 1,1-dimethyl-propanol group, 1,1-dimethyl-butanol group, 1-methyl-propanol group and tert-butyl triol group.

In any embodiment, the additive (A) is selected from at least one of N-tert-butyl-α-phenylnitrone, N-tert-butyl-α-4-fluorophenylnitrone, 5,5-dimethyl-1-pyrroline oxide, N-tert-butyl-α-methylnitrone, 2,2,6,6-tetramethylpiperidine oxide, and 4-ethoxy-2,2,6,6-tetramethylpiperidine 1-oxide. Therefore, it can not only reduce the thermal shrinkage of the separator and improve the operation stability of the separator, thereby improving the overcharge prevention performance of the secondary battery, but also improve the utilization efficiency of the lithium supplement added in the secondary battery, thereby improving the charge/discharge capacity, service life and safety performance of the secondary battery.

In any embodiment, the specific surface area of the lithium supplement is $0.5 m^2/g$ - $20m^2/g$, optionally $1 m^2/g$ - $2 m^2/g$; therefore, the delithiation efficiency of the lithium supplement can be further improved, thereby improving the effect of the additive (A) on improving the utilization efficiency of the lithium supplement.

In any embodiment, the additive (A) is coated on at least one side of the separator substrate close to the positive electrode, and optionally, the additive (A) is coated on both sides of the separator substrate. Therefore, it is possible to further improve the effect of the additive (A) on improving the utilization efficiency of the lithium supplement, and the working stability of the separator can be further improved.

In any embodiment, the lithium supplement is added to a positive electrode material on the positive electrode

plate. Therefore, the effect of lithium supplement in making up for the loss of recyclable lithium due to a large amount of lithium source consumption caused by the formation of a solid electrolyte film layer (SEI) on the surface of the negative electrode during the first charging process can be further improved, thereby improving the charge/discharge capacity and cycle life of the secondary battery.

In any embodiment, the additive (A) is mixed with nano-alumina and then coated to the separator substrate, which can further reduces the thermal shrinkage of the separator and improves the thermal safety performance of the secondary battery cell, thereby improving the cycle life and safety performance of the secondary battery; in addition, since the nano-alumina has a large specific surface area, which helps the additive (A) to play its role of improving the efficiency of the lithium supplement.

In any embodiment, the lithium supplement is coated on at least one side of the separator substrate close to the positive electrode, and optionally, the lithium supplement is coated on both sides of the separator substrate. Therefore, the effect of the additive (A) on improving the utilization efficiency of the lithium supplement can be further improved, thereby further improving the charge/discharge capacity and cycle life of the secondary battery. Optionally,the additive (A) is mixed with the lithium supplement and then coated on the separator substrate, or the lithium supplement is coated on the separator to form a lithium supplement layer, and then the additive (A) is coated on the lithium supplement layer. Therefore, the effect of the additive (A) on improving the utilization efficiency of the lithium supplement can be further improved, thereby further improving the charge/discharge capacity and cycle life of the secondary battery.

In any embodiment, the purity of the lithium supplement is greater than or equal to 90%; optionally, greater than or equal to 95%. Therefore, the effect of the lithium supplement on making up for the loss of recyclable lithium due to a large amount of lithium source consumption caused by the formation of a solid electrolyte film layer (SEI) on the surface of the negative electrode during the first charging process can be further improved, thereby further improving the charge/discharge capacity and cycle life of the secondary battery.

In any embodiment, the separator substrate is formed from materials selected from one or more combinations of a polyolefin film, a polyester film, a cellulose film, a polyimide film, a non-woven separator, and a polyimide thin film, optionally a polyethylene thin film, a polypropylene thin film, a polyethylene terephthalate film, a cellulose film, a polyimide film, a non-woven separator and a polyimide thin film, further optionally a polypropylene thin film. Therefore, the working efficiency of the secondary battery can be improved, and the ability to block electrons, the conductivity to lithium ions, and the strength of the separator can also be improved.

In any embodiment, the thickness of the separator is 3 μm-20 μm, optionally 9 μm-16 μm. Therefore, the ability to block electrons, the conductivity to lithium ions, and the strength of the separator can also be improved.

A second aspect of the present application further provides a battery module comprising the secondary battery of the first aspect.

A third aspect of the present application provides a battery pack comprising the battery module of the second aspect of the present application.

A fourth aspect of the present application provides a power consuming device comprising at least one selected from the secondary battery of the first aspect of the present application, the battery module of the second aspect of the present application, or the battery pack of the third aspect of the present application.

According to the present invention, a secondary battery, a battery module, a battery pack, and a power consuming device using the secondary battery can be obtained, in the secondary battery, not only the lithium supplement is used to improve the charge/discharge capacity, but also the additive (A) is used to further improve the utilization efficiency of the lithium supplement, reduce the thermal shrinkage of the separator, and improve the working stability of the separator, thereby improving the charge/discharge capacity, cycle life, and safety performances such as overcharge prevention performance of the secondary battery.

## Brief Description of the Drawings

Fig. 1 is a schematic diagram of a separator structure of a secondary battery in an embodiment of the present application; in which (A) is single-layer coating, and (B) is double-layer coating.

Fig. 2 is a schematic diagram of a separator structure of a secondary battery in another embodiment of the present application; in which (A) is single-layer coating, and (B) is double-layer coating.

Fig. 3 is a schematic diagram of a separator structure of a secondary battery in another embodiment of the present application; in which (A) is single-layer coating, and (B) is double-layer coating.

Fig. 4 is a schematic diagram of a separator structure of a secondary battery in another embodiment of the present application; in which (A) is single-layer coating, and (B) is double-layer coating.

Fig. 5 is a schematic diagram of a secondary battery in an embodiment of the present application.

Fig. 6 is an exploded view of the secondary battery in the embodiment of the present application as shown in Fig. 5.

Fig. 7 is a schematic diagram of a battery module in an embodiment of the present application.
Fig. 8 is a schematic diagram of a battery pack in an embodiment of the present application.
Fig. 9 is an exploded view of the battery pack in the embodiment of the present application as shown in Fig. 8.
Fig. 10 is a schematic diagram of a power consuming device in an embodiment of the present application.

List of reference signs:

1 battery pack; 2 upper box body; 3 lower box body; 4 battery module; 5 secondary battery; 51 housing; 52 electrode assembly; 53 top cover assembly.

**Detailed Description of Embodiments**

Hereafter, embodiments of a secondary battery, a battery module, a battery pack and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.
"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.
All the embodiments and optional embodiments of the present application can be combined with one another to form new technical solutions, unless otherwise stated.
All technical features and optional technical features of the present application can be combined with one another to form a new technical solution, unless otherwise stated.
Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.
The terms "comprise" and "include" mentioned in the present application are open-ended or closed-ended, unless otherwise stated. For example, the terms "comprising" and "including" may mean that other components not listed may also be comprised or included, or only the listed components may be comprised or included.
In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).
In the study of the effect of the lithium supplement on improving the charging and discharging performance of the secondary battery, the present inventor has found that when using a specific lithium supplement, adding a specific additive into the separator of the secondary battery can not only reduce the thermal shrinkage of the separator, but also improve the working stability of the separator, thereby improving the safety performances such as the overcharge prevention performance of the secondary battery, but also improve the utilization efficiency of the specific lithium supplement, thereby further improving the charge/discharge capacity and service life of the secondary battery.

Secondary battery

In one embodiment of the present application, the present application provides a secondary battery, which includes a positive electrode plate, a negative electrode plate, a separator, and an electrolyte solution. The secondary

battery contains a lithium supplement selected from at least one of the substances represented by the general formula (I) below.

$$mLi_{x1}O \cdot n(Ni_{y1}Mn_{y2}Co_{y3}Cu_{y4}Fe_{y5})O \quad (I)$$

(In general formula (I), $1 \leq x1 \leq 2$; $0 \leq y1 \leq 1$; $0 \leq y2 \leq 1$; $0 \leq y3 \leq 1$; $0 \leq y4 \leq 2$; $0 \leq y5 \leq 1$; $0.5 \leq y1 + y2 + y3 + y4 + y5 \leq 1$; $1 \leq m \leq 3$; $0 \leq n/m \leq 1$.)

In addition, the separator of the secondary battery comprises a separator substrate and an additive (A), wherein the additive (A) is selected from any one or two or more of nitrone derivatives having a structure represented by the formula (II) below in the molecule, and piperidine derivatives having a structure represented by the formula (III) below in the molecule.

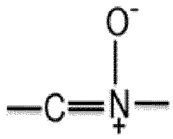

(II)

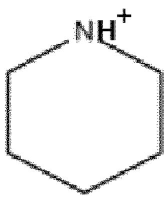

(III)

After careful research, the applicant has unexpectedly found that: by containing a lithium supplement selected from at least one of those represented by the above-mentioned general formula (I) in the secondary battery, and by comprising the above-mentioned nitrone derivatives having the above-mentioned structure represented by formula (II) in the molecule, or piperidine derivatives having the above-mentioned structure represented by formula (III) in the molecule as an additive in the separator of the secondary battery, the present application can provide a secondary battery, in which not only the thermal shrinkage of the separator is reduced, thereby improving the safety performances such as overcharge prevention performance, but also the utilization efficiency of the lithium supplement is improved, thereby improving the charge/discharge capacity and service life.

Although the mechanism is not clear yet, the present applicant speculates that when the lithium ions of the lithium supplement leave their original positions to participate in the charging and discharging of the secondary battery, free electrons or negative ions will be generated correspondingly, and the $N^+$ structure in the above-mentioned nitrone derivatives having the structure represented by formula (II) in the molecule, or piperidine derivatives having the above-mentioned structure represented by formula (III) in the molecule can neutralize these free electrons or negative ions, thereby reducing other side reactions caused by these free electrons or negative ions. On the other hand, since the above-mentioned nitrone derivatives having the structure represented by formula (II) in the molecule, or piperidine derivatives having the above-mentioned structure represented by formula (III) in the molecule have a large molecular weight, after neutralizing these free electrons or negative ions, they will not produce other free harmful small molecules, but will be stably fixed on the separator, so the cycle performance of the secondary battery will not be damaged. In addition, the nitrone derivatives having the structure represented by formula (II) in the molecule, or piperidine derivatives having the above-mentioned structure represented by formula (III) in the molecule can play a binding role with respect to the separator substrate, after coating on the separator substrate, it increases the flexibility of the separator and reduces the thermal shrinkage of the separator, which makes it difficult for the metal particles introduced during processing to pierce the separator and cause short circuit, and improves the working stability of the separator. Therefore, by coating the above-mentioned nitrone derivatives having the structure represented by formula (II) in the molecule, or piperidine derivatives having the above-mentioned structure represented by formula (III) in the molecule on the separator substrate as the additive (A) can not only improve the utilization efficiency of the above-mentioned specific lithium supplement, but also improve the flexibility of the separator and reduce the thermal shrinkage of the separator, thereby improving the charge/discharge capacity, service life and safety performance of the secondary battery.

In any embodiment, the molar content N1 of the lithium supplement and the molar content N2 of the additive (A) satisfy the following relational expression: $0.1 \leq N2/(N1 \times m \times x1) \leq 0.5$; optionally, N1 and N2 satisfy the following

relational expression: 0.27 ≤ N2/(N1 × m × x1) ≤ 0.35. Therefore, the side reaction caused by the migration of lithium ions of the lithium supplement can be greatly reduced, and the utilization efficiency of the lithium supplement can be further improved.

In some embodiments, the above-mentioned nitrone derivatives having the structure represented by formula (II) in the molecule are compounds represented by the general formula (II') below, or cyclic nitrone derivatives with 4-8 membered rings.

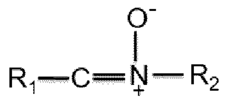
(II')

(In formula (II'), $R_1$ and $R_2$ are each independently selected from at least one of methyl, ethyl, propyl, isopropyl, butyl, isobutyl, tert-butyl, fluoromethyl, fluoroethyl, fluoropropyl, methylhydroxy, ethylhydroxy, phenyl, tolyl, fluorophenyl, methoxy, and ethoxy, 1,1-dimethyl-ethanol group, 1,1-dimethyl-propanol group, 1,1-dimethyl-butanol group, 1-methyl-propanol group and tert-butyl triol group.)

In some embodiments, the additive (A) is selected from at least one of N-tert-butyl-α-phenylnitrone, N-tert-butyl-α-4-fluorophenylnitrone, 5,5-dimethyl-1-pyrroline oxide, N-tert-butyl-α-methylnitrone, 2,2,6,6-tetramethylpiperidine oxide, and 4-ethoxy-2,2,6,6-tetramethylpiperidine 1-oxide as shown below. Therefore, it can not only improve the flexibility of the separator, reduce the thermal shrinkage of the separator and improve the working stability of the separator, but also improve the utilization efficiency of the lithium supplement added in the secondary battery, thereby improving the charge/discharge capacity, service life and safety performance of the secondary battery.

Additive (A1): N-tert-butyl-α-phenylnitrone with the following molecular formula.

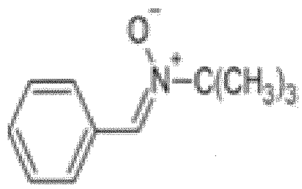

Additive (A2): N-tert-butyl-α-4-fluorophenylnitrone with the following molecular formula.

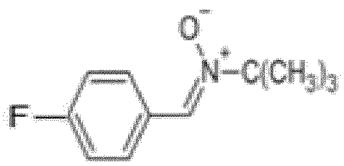

Additive (A3): 5,5-dimethyl-1-pyrroline oxide (DMPO) with the following molecular formula.

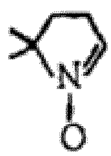

Additive (A4): N-tert-butyl-α-methylnitrone with the following molecular formula.

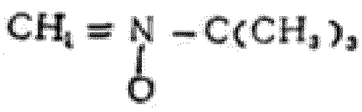

Additive (A5): 2,2,6,6-tetramethylpiperidine oxide with the following molecular formula.

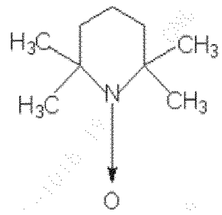

Additive (A6): 4-ethoxy-2,2,6,6-tetramethyl-1-piperidine oxide with the following molecular formula.

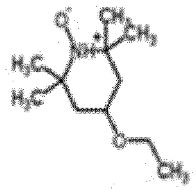

In some embodiments, the additive (A) is coated on at least one side of the separator substrate close to the positive electrode (referring to (A) in Fig. 1), and optionally, the additive (A) is coated on both sides of the separator substrate (referring to (B) in Fig. 1). Therefore, it is possible to further improve the effect of the additive (A) on improving the utilization efficiency of the lithium supplement, and the flexibility of the separator can be further improved.

In some embodiments, the additive (A) can be mixed with nano-alumina and then coated on the separator substrate (referring to (A) and (B) in Fig. 2), which not only improves the flexibility of the separator, but also further reduces the thermal shrinkage of the separator due to the addition of nano-alumina and improves the thermal safety performance of the secondary battery cell, thereby improving the cycle life and safety performance of the secondary battery; In addition, since the nano-alumina has a large specific surface area, which can also help the additive (A) to play its role of improving the utilization efficiency of the lithium supplement.

In some embodiments, the above-mentioned lithium supplement is selected from at least one of $Li_2O$, $Li_2O_2$, $Li_5FeO_4$, and $Li_2Cu_{0.5}Ni_{0.5}O_2$; preferably, the lithium supplement is selected from at least one of $Li_2O$ and $Li_2O_2$. Therefore, it can not only make up for the loss of recyclable lithium due to a large amount of lithium source consumption caused by the formation of a solid electrolyte film layer (SEI) on the surface of the negative electrode during the first charging process, but also further improve the utilization efficiency of the lithium supplement by including the additive (A) in the separator, thereby further improving the charge/discharge capacity and the service life of the secondary battery.

In some embodiments, from the viewpoint of improving the utilization efficiency of the lithium supplement, the specific surface area of the lithium supplement is 0.5 $m^2/g$ - 20$m^2/g$, optionally 1 $m^2/g$ - 2 $m^2/g$. Further, from the viewpoint of improving the effect of the lithium supplement on making up for the loss of recyclable lithium during the first charging process and improving the energy density of the battery, the purity of the lithium supplement is greater than or equal to 90%; preferably greater than or equal to 95%. When the purity of the lithium supplement is lower than 90%, there are many inert impurities (LiOH, $Li_2CO_3$, etc.) on the surface of the material, which reduces the lithium-supplementing effect of additives; when the content of the lithium supplement is higher than 97%, the influence of impurities can be ignored.

The above-mentioned lithium supplement represented by general formula (I) has a strong alkalinity, which may damage the processability of the secondary battery, and can be coated with a single layer or multiple layers on the outside. The coating layer can be selected from metal fluoride $AlF_3$, oxides ($V_2O_5$, $Al_2O_3$, $ZrO_2$, $TiO_2$, ZnO, $Co_3O_4$, $SiO_2$), phosphates ($AlPO_4$, $FePO_4$, $Co_3(PO_4)_2$, $Ni_3(PO_4)_2$), lithium salts ($Li_3PO_4$, $Li_2MnO_3$, $LiAlO_2$, $Li_2TiO_3$, $Li_2ZrO_3$), single-layer coating of certain elementary substances (carbon, graphene, carbon nanotubes), or double-layer coating ($Al_2O_3$ and PEDOT (polyethylene glycol-modified poly-3,4-ethylenedioxythiophene), $Li_3PO_4$and PPy (conductive polymer polypyrrole) etc.).

The first delithiation capacity of the lithium-supplementing additive is 300 - 1500 mAh/g, preferably 400 - 900 mAh/g. Therefore, the supplementary effect of the lithium supplement on the consumption of lithium sources can be better exerted. The first charging and discharging voltage range is 2.0 - 4.5 V (vs Li), and in order to match the corresponding potential of the positive electrode active material, the voltage range is preferably 3.0 - 3.75 V (vs Li).

In some embodiments, the lithium supplement can be added to the positive film layer as the positive electrode material, thereby quickly making up for the loss of recyclable lithium due to the lithium source consumption caused by the formation of a solid electrolyte film layer (SEI) on the surface of the negative electrode during the first charging process, and improving the charge/discharge capacity and cycle life of the secondary battery.

In some embodiments, the lithium supplement is coated on at least one side of the separator substrate close to the positive electrode, and optionally, the lithium supplement is coated on both sides of the separator substrate. In

this way, the lithium supplement coated on the separator substrate may leave some oxides after separation. These oxides, like nano-alumina, have poor conductivity, but can reduce the thermal shrinkage of the separator and improve the thermal safety performance of the secondary battery cell. In this case, it is preferred to mix the additive (A) with the lithium supplement and then coat same on the separator substrate (referring to (A) and (B) of Fig. 3), or to coat a lithium supplement on the separator substrate to form a lithium supplement layer, and then coat an additive (A) on the lithium supplement layer (referring to (A) and (B) of Fig. 4). Therefore, the effect of the additive (A) on improving the utilization efficiency of the lithium supplement can be further improved, thereby further improving the charge/discharge capacity and cycle life of the secondary battery.

In some embodiments, the separator substrate is formed from materials selected from one or more combinations of a polyolefin film, a polyester film, a cellulose film, a polyimide film, a non-woven separator, and a polyimide thin film, optionally a polyethylene thin film, a polypropylene thin film, a polyethylene terephthalate film, a cellulose film, a polyimide film, a non-woven separator and a polyimide thin film, further optionally a polypropylene thin film. Therefore, the working efficiency of the secondary battery can be improved, and the ability to block electrons, the conductivity to lithium ions, and the strength of the separator can also be improved.

In some embodiments, the thickness of the separator is 3 μm-20 μm, optionally 9 μm-16 μm. Therefore, the ability to block electrons, the conductivity to lithium ions, and the strength of the separator can also be improved.

[Positive electrode plate]

In some embodiments, the positive electrode plate comprises a positive current collector and a positive film layer provided on at least one surface of the positive current collector, wherein the positive film layer comprises a positive electrode active material, and optionally, the positive film layer further comprises the above-mentioned lithium supplement represented by general formula (I).

As an example, the positive current collector has two surfaces opposite in its own thickness direction, and the positive film layer is provided on either or both of opposite surfaces of the positive current collector.

In some embodiments, the positive current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive active material may be a positive active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

In some embodiments, the positive film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: the above-mentioned components for preparing the positive electrode plate, such as a positive electrode active material, a conductive agent, a lithium supplement, a binder and any other components, are dispersed in a solvent (e.g. N-methylpyrrolidone) to form a positive electrode slurry; and the positive electrode slurry is coated on the positive current collector, and a positive electrode plate can be obtained after procedures such as drying and cold pressing, wherein the coating amount of the positive

electrode material is usually 12 - 30 mg/$cm^2$.

[Negative electrode plate]

The negative electrode plate comprises a negative current collector and a negative film layer provided on at least one surface of the negative current collector, wherein the negative film layer comprises a negative electrode active material.

As an example, the negative current collector has two surfaces opposite in its own thickness direction, and the negative film layer is provided on either or both of the two opposite surfaces of the negative current collector.

In some embodiments, the negative current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and the negative electrode slurry is coated on the negative current collector, and a negative electrode plate can be obtained after procedures such as drying and cold pressing, wherein the coating amount of the negative electrode material is usually 5 - 14 mg/$cm^2$.

[Electrolyte]

The electrolyte is located between the positive electrode plate and the negative electrode plate and functions for conducting ions. The type of the electrolyte is not specifically limited in the present application, and can be selected according to actual requirements.

In some embodiments, an electrolyte solution is used as the electrolyte. In which, the electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the

battery.

In some embodiments, the positive electrode plate, the negative electrode plate and the separator can be made into the electrode assembly by a winding process or a lamination process.

In some embodiments, the secondary battery may comprise an outer package. The outer package can be used to encapsulate the above-mentioned electrode assembly and electrolyte.

In some embodiments, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, and polybutylene succinate, etc.

The shape of the secondary battery is not particularly limited in the present application, and may be cylindrical, square or of any other shape. For example, Fig. 5 shows a secondary battery 5 with a square structure as an example.

In some embodiments, referring to Fig. 6, an outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a laminating process to form an electrode assembly 52. The electrode assembly 52 is encapsulated in the accommodating cavity. The electrolyte solution is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 7 shows a battery module 4 as an example. Referring to Fig. 7, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Figs. 8 and 9 show a battery pack 1 as an example. Referring to Fig. 8 and Fig. 9, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, battery module or battery pack can be selected according to the usage requirements thereof.

Fig. 10 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the electrical apparatus may be a mobile phone, a tablet computer, a laptop computer, etc. The electrical apparatus is generally required to be thin and light, and may use the secondary battery as a power supply.

## Examples

Hereinafter, the examples of the present application will be explained. The examples described below are exemplary and are merely for explaining the present application, and should not be construed as limiting the present

application. The examples in which techniques or conditions are not specified are based on the techniques or conditions described in documents in the art or according to the product introduction. The reagents or instruments used therein for which manufacturers are not specified are all conventional products that are commercially available.

Blank example 1-1, comparative example 1-1, and examples 1-1 - 1-15

Lithium supplement: $Li_5FeO_4$ {the corresponding general formula (I) is: $2.5Li_2O \cdot 1.5Fe_{0.67}O$, that is, m = 2.5, x1 = 2, n = 1.5, y5 = 0.67, and the rest are 0.}

Blank example 1-1

1) Preparation method of positive electrode plate:

$LiFePO_4$(LFP) (with a volume average particle size of 1.2 μm), a conductive agent of acetylene black, and a binder (PVDF polyvinylidene fluoride) are added in N-methylpyrrolidone (NMP) solvent at a weight ratio of 97 : 1 : 2, fully stirred and evenly mixed, then coated on a Al foil with a surface density of 19.4 mg/cm$^2$, dried and cold pressed to obtain a positive electrode plate, wherein the compacted density is 2.4 g/cm$^3$.

2) Preparation method of negative electrode plate:

an active material of artificial graphite, a conductive agent of acetylene black, a binder of styrenebutadiene rubber (SBR), and a thickener of carbon methyl cellulose sodium (CMC) are fully stirred and evenly mixed in a deionized water solvent system at a weight ratio of 96.5 : 0.7 : 1.8 : 1, then coated on a Cu foil with a surface density of 9.7 mg/cm$^2$, dried and cold pressed to obtain a negative electrode plate, wherein the compacted density is 1.6 g/cm$^3$.

3) Separator

A PE/PP porous polymer thin film with a thickness of 12 μm is used as the separator.

4) Electrolyte solution

Ethylene carbonate (EC) and diethyl carbonate (DEC) are mixed at a mass ratio of 50/50 as a solvent, and 1.1 M $LiPF_6$ lithium salt is added and dissolved therein as an electrolyte to form an electrolyte solution.

The positive electrode plate, the separator and the negative electrode plate are stacked in sequence, such that the separator is located between the positive electrode and the negative electrode to play a role of isolation, and then winding is performed to obtain a bare cell. The bare cell is placed in the outer package of the secondary battery, and the prepared electrolyte solution is injected and packaged to obtain the secondary battery of blank example 1-1.

Comparative Example 1-1

The secondary battery of comparative example 1-1 is obtained in the same steps as that of blank example 1-1, except that 3 mass% of $Li_5FeO_4$ (relative to the amount of $LiFePO_4$ as the positive active material) is further added into a solvent as a lithium supplement during the preparation of the positive electrode plate, fully stirred and evenly mixed, then coated on a Al foil with a surface density of 19.4 mg/cm$^2$, dried and cold pressed, wherein the compacted density is 2.4 g/cm$^3$.

Example 1-1

The secondary battery of example 1-1 is obtained in the same steps as that of comparative example 1-1, except that the above-mentioned separator is used as the separator substrate, and a slurry (1) of the following additive (A1) (N-tert-butyl-α-phenylnitrone) is coated on both sides thereof and dried at a temperature of 50°C to prepare the separator of example 1-1.

Slurry (1) of additive (A1): The additive (A1) in an amount satisfying the (additive (A): lithium supplement) numerical values shown in table 1, nano-alumina with a particle size of Dv50 = 300 - 800 nm, and water are mixed at a weight ratio of 3 : 3 : 4 to prepare a slurry (1) of the additive (A1). In which, the numerical value of the additive (A): the lithium supplement shown in table 1 = the molar content N2 of the additive (A)/(the molar content N1 of the lithium supplement × 2.5 × 2).

Examples 1-2 - 1-7

The secondary battery of examples 1-2 - 1-7 is obtained in the same steps as that of example 1-1, except that the amount of the additive (A1) is adjusted to one that satisfies the corresponding (additive (A): lithium supplement) numerical values shown in table 1 to prepare the separator of each example.

Examples 1-8 - 1-12

The secondary battery of examples 1-8 - 1-12 is obtained in the same steps as that of example 1-3, except that the additive (A1) is replaced with the additives shown in table 1 to prepare the separator of each example.

Example 1-13

The secondary battery of example 1-13 is obtained in the same steps as that of comparative example 1-1, except that the separator of comparative example 1-1 is used as the separator substrate, and a slurry (2) of the following additive (A1) (N-tert-butyl-$\alpha$-phenylnitrone) is coated on one side thereof close to the positive electrode, and dried at a temperature of 50°C to prepare the separator of example 1-13.

Slurry (2) of additive (A1): the additive (A1) in an amount satisfying the (additive (A): lithium supplement) numerical values shown in table 1 is added in water to prepare a slurry (2) of the additive (A1). In which, the numerical value of the additive (A): the lithium supplement shown in table 1 represents: the molar content N2 of the additive (A)/(the molar content N1 of the lithium supplement $\times$ 2.5 $\times$ 2).

Example 1-14

3 mass% of $Li_5FeO_4$ (relative to the amount of $LiFePO_4$ as the positive active material) is used as the lithium supplement, and the lithium supplement and the additive (A1) in an amount satisfying the (additive (A): lithium supplement) numerical values shown in table 1 are added into water, stirred and mixed to prepare a slurry (3) of the additive (A1), and the slurry (3) is coated on both sides of the separator of blank example 1-1 and dried to prepare the separator of example 1-14. The secondary battery of example 1-14 is obtained in the same steps as that of blank example 1-1 except for those mentioned above.

Example 1-15

3 mass% of $Li_5FeO_4$ (relative to the amount of $LiFePO_4$ as the positive active material) is used as the lithium supplement, and the lithium supplement is dissolved in water, stirred and mixed to prepare a lithium supplement slurry. The separator of blank example 1-1 is used as the separator substrate, and the slurry of the lithium supplement is coated on the side of the separator substrate close to the positive electrode and dried, then the slurry (2) of the additive (A1) obtained in the same way as that of the above-mentioned example 1-13 is coated on the lithium supplement coating and dried to prepare the separator of example 1-15. The secondary battery of example 1-15 is obtained in the same steps as that of blank example 1-1 except for those mentioned above.

Test method:

1. Thermal shrinkage test of the separator placed at 120°C for 24 h

The separator of the each example and comparative example used for the test is prepared in the same way as the above-mentioned each example, respectively, and a separator of 10 cm*10 cm is taken, two glass plates with a thickness of 5 mm are taken to sandwich the separator, and the length L0 is measured. The glass plate sandwiching the separator is placed into an oven at 120°C for 24 h, and moved out to measure the length L1 of the separator. The thermal shrinkage of each separator are calculated according to the following formula, and are recorded in table 1, respectively.

$$\text{Thermal shrinkage} = (L0\text{-}L1)/L1 \times 100\%$$

2. Calculation of utilization efficiency of lithium supplement

Test samples of the secondary batteries are prepared in the same way as in the above-mentioned each example,

respectively.

The secondary battery of blank example 1-1 (negative electrode coating weight $a_0$, positive electrode coating weight $c_0$) is charged at a rate of 1C to a voltage of 3.65 V at normal temperature, then the battery is disassembled to move the negative electrode plate, which is tested for inductively coupled plasma emission spectrometer (ICP) using an inductively coupled plasma emission spectrometer (ICAP7400) manufactured by Thermo Fisher scientific in the United States, so as to obtain the mass percentage $X_0$ of lithium contained therein.

The battery of comparative example and example (negative electrode coating weight $a_n$, positive electrode coating weight $c_n$, and the mass percentage of the lithium supplement is L) is charged at a rate of 1C to a voltage of 3.65 V at normal temperature, then the battery is disassembled to move the negative electrode plate, which is tested for inductively coupled plasma emission spectrometer (ICP), so as to obtain the mass percentage $X_n$ of lithium contained therein. According to the following calculation formula, the utilization efficiency of the lithium supplement of each comparative example and example is calculated and recorded in table 1.

$$\text{Proportion of active material lithium source } Y = (c_n(1\text{-}L) \times a_0 \times X_0)/(a_n \times c_0)$$

$$\text{Utilization efficiency of lithium supplement} = (X_n\text{-}Y)/(X_0\text{-}Y)$$

3. Test of specific charge/discharge capacity

Test samples of the secondary batteries are prepared in the same way as in the above-mentioned each example, respectively.

Each secondary battery is charged at normal temperature (25°C) at a constant current rate of 0.33C to the end-of-charge voltage, and then charged at a constant voltage to 0.05C; the charging capacity Ec0 of the first cycle is measured, and the specific charge capacity can be obtained by dividing Ec0 by the mass of the positive electrode active material of the battery.

The above-mentioned secondary battery that has been charged is taken, and discharged at a constant current of 0.33C to the end-of-discharge voltage, and the discharge capacity Ed0 of the first cycle is measured. The specific discharge capacity can be obtained by dividing Ed0 by the mass of the positive electrode active material of the battery.

The tests of specific charge capacity and specific discharge capacity are repeated 5 times, and the average values are recorded in table 1, respectively, as the specific charge capacity and specific discharge capacity of each example.

$$\text{Specific charge capacity (mAh/g)} = \text{Ec0/mass of positive electrode active material}$$

$$\text{Specific discharge capacity (mAh/g)} = \text{Ed0/mass of positive electrode active material}$$

4. Capacity retention test after storage at 60°C for 100 days

The secondary battery to be tested is charged to a voltage of 3.65 V at a rate of 1C at normal temperature, and then discharged to a voltage of 2.5 V at a rate of 1C, the reversible capacity E0 can be measured by reading directly from the instrument. The fully charged secondary battery is placed in an oven at 60°C and stored for 100 days, then the battery is taken out, and its reversible capacity is immediately tested and recorded as En.

The capacity retention rate of the battery after storage at 60°C for 100 days is calculated according to the following formula and shown in table 1.

$$\varepsilon = (En\text{-}E0)/E0 \times 100\%.$$

5. Overcharge test

Secondary batteries are prepared in the same way as in the above-mentioned each example, respectively.

a) fully charging of battery: at normal temperature (25°C), the battery is charged at a constant current rate of 1C to the end-of-charge voltage, and then charged at a constant voltage to a current of 0.05C, the battery is in a fully

charged state at this moment (100%SOC).

b) the battery in a fully charged state is charged at a constant current rate of 1C until the battery fails (for the standard of battery failure, reference can be made to EUCAR battery abuse standard grade, and the battery is judged as failure when it reaches a grade of HL3 or more (the battery starts to smoke)), and the charging is stopped. The SOC of the battery at this time is recorded and recorded in table 1.

Table 1:

| | Lithium supplement | Additive (A) | Additive (A): lithium supplement N2/ (N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Blank example 1-1 | / | / | - | / | 3.50% | / | 156 | 140 | 90.1% | 117.70% |
| Comparative Example 1-1 | $Li_5FeO_4$ | / | - | / | 3.50% | 72.30% | 164 | 142 | 94.8% | 118.60% |
| Example 1-1 | $Li_5FeO_4$ | Additive (A1) | 0.1 | (B) of Fig. 2 | 2.40% | 81.70% | 166 | 143 | 96.1% | 122.20% |
| Example 1-2 | $Li_5FeO_4$ | Additive (A1) | 0.27 | (B) of Fig. 2 | 1.90% | 87.20% | 169 | 147 | 96.9% | 128.40% |
| Example 1-3 | $Li_5FeO_4$ | Additive (A1) | 0.3 | (B) of Fig. 2 | 1.60% | 89.90% | 171 | 148 | 97.7% | 133.50% |
| Example 1-4 | $Li_5FeO_4$ | Additive (A1) | 0.35 | (B) of Fig. 2 | 1.50% | 87.60% | 168 | 146 | 96.5% | 133.60% |
| Example 1-5 | $Li_5FeO_4$ | Additive (A1) | 0.4 | (B) of Fig. 2 | 1.30% | 86.10% | 167 | 142 | 95.1% | 133.90% |
| Example 1-6 | $Li_5FeO_4$ | Additive (A1) | 0.5 | (B) of Fig. 2 | 1.10% | 81.30% | 166 | 139 | 94.2% | 134.10% |
| Example 1-7 | $Li_5FeO_4$ | Additive (A1) | 1 | (B) of Fig. 2 | 0.50% | 74.50% | 165 | 135 | 93.8% | 134.40% |
| Example 1-8 | $Li_5FeO_4$ | Additive (A2) | 0.3 | (B) of Fig. 2 | 1.40% | 88.80% | 170 | 147 | 97.0% | 130.20% |
| Example 1-9 | $Li_5FeO_4$ | Additive (A3) | 0.3 | (B) of Fig. 2 | 1.60% | 86.30% | 170 | 146 | 96.4% | 133.40% |
| Example 1-10 | $Li_5FeO_4$ | Additive (A4) | 0.3 | (B) of Fig. 2 | 1.30% | 86.70% | 167 | 146 | 96.5% | 129.60% |
| Example 1-11 | $Li_5FeO_4$ | Additive (A5) | 0.3 | (B) of Fig. 2 | 1.80% | 84.30% | 175 | 145 | 95.3% | 135.20% |

(continued)

| | Lithium supplement | Additive (A) | Additive (A): lithium supplement N2/ (N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Example 1-12 | $Li_5FeO_4$ | Additive (A6) | 0.3 | (B) of Fig. 2 | 1.90% | 83.40% | 177 | 143 | 95.1% | 135.90% |
| Example 1-13 | $Li_5FeO_4$ | Additive (A1) | 0.3 | (B) of Fig. 1 | 2.60% | 86.30% | 170 | 147 | 96.60% | 130.50% |
| Example 1-14 | $Li_5FeO_4$ | Additive (A1) | 0.3 | (A) of Fig. 3 | 1.40% | 86.20% | 163 | 143 | 95.70% | 134.20% |
| Example 1-15 | $Li_5FeO_4$ | Additive (A1) | 0.3 | (A) of Fig. 4 | 1.30% | 87.40% | 162 | 143 | 95.30% | 135.90% |

From the comparison of the above-mentioned comparative example 1-1 and blank example 1-1 and the comparison of each example and blank example 1-1, it can be seen that by including any of additives (A1) to (A6) into the separator of the secondary battery added with $Li_5FeO_4$ as the lithium supplement, it can not only reduce the thermal shrinkage of the separator and improve the working stability of the separator, but also improve the utilization efficiency of the lithium supplement, and improve the charge/discharge capacity, service life and overcharge prevention performance of the secondary battery.

In addition, it is also known that the additive (A) can be coated on the separator alone, or it can be mixed and coated on the separator together with the lithium supplement; moreover, a layer of the additive (A) can be coated after a lithium supplement layer is coated on the separator. The additive (A) can be coated in single-layer or double-layer. In addition, the additive (A) can also be mixed with nano-alumina to form a slurry, which is then coated on the separator.

Comparative example 2-1, and examples 2-1 - 2-12

Lithium supplement: $Li_2O_2$ {the corresponding general formula (I) is: m = 2, x1 = 1, and the rest are 0.}

Comparative Example 2-1

The secondary battery of comparative example 2-1 is obtained in the same steps as that of blank example 1-1, except that 3 mass% of $Li_2O_2$ (relative to the amount of $LiFePO_4$ as the positive active material) is further added into a solvent as a lithium supplement during the preparation of the positive electrode plate, fully stirred and evenly mixed.

Examples 2-1 - 2-7

The secondary battery of examples 2-1 - 2-7 is obtained in the same steps as that of example 1-1, except that $Li_2O_2$ is used as the lithium supplement instead, and the amount of the additive (A1) is adjusted to one that satisfies the corresponding (additive (A): lithium supplement) numerical values shown in table 2 to prepare the separator of each example.

Examples 2-8 - 2-12

The secondary battery of examples 2-8 - 2-12 is obtained in the same steps as that of example 2-1, except that the additive (A1) is replaced by the additives shown in table 2, and the amount of the additives is adjusted to one that satisfies the corresponding (additive (A): lithium supplement) numerical values shown in table 2 to prepare the separator of each example.

The thermal shrinkage of the separator, the utilization efficiency of the lithium supplement, the charging and discharging specific capacity, the capacity retention test, and the overcharge failure SOC are tested according to the same method mentioned above for each comparative example and example, and the results are shown in table 2.

[Table 2]

| | Lithium supplement | Additive (A) | Additive (A): lithium supplement N2/ (N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Blank example 1-1 | / | / | - | / | 3.50% | / | 156 | 140 | 90.1% | 117.70% |
| Comparative Example 2-1 | $Li_2O_2$ | / | - | / | 3.50% | 75.8% | 170 | 142 | 95.5% | 117.90% |
| Example 2-1 | $Li_2O_2$ | Additive (A1) | 0.1 | (B) of Fig. 2 | 2.90% | 80.20% | 172 | 143 | 96.00% | 120.30% |
| Example 2-2 | $Li_2O_2$ | Additive (A1) | 0.27 | (B) of Fig. 2 | 2.10% | 90.10% | 175 | 146 | 97.60% | 126.50% |
| Example 2-3 | $Li_2O_2$ | Additive (A1) | 0.3 | (B) of Fig. 2 | 1.80% | 92.10% | 176 | 147 | 98.10% | 130.40% |
| Example 2-4 | $Li_2O_2$ | Additive (A1) | 0.35 | (B) of Fig. 2 | 1.70% | 89.40% | 174 | 146 | 97.30% | 130.40% |
| Example 2-5 | $Li_2O_2$ | Additive (A1) | 0.4 | (B) of Fig. 2 | 1.50% | 87.10% | 173 | 143 | 96.60% | 130.60% |
| Example 2-6 | $Li_2O_2$ | Additive (A1) | 0.5 | (B) of Fig. 2 | 1.30% | 85.80% | 172 | 140 | 95.80% | 130.80% |
| Example 2-7 | $Li_2O_2$ | Additive (A1) | 1 | (B) of Fig. 2 | 0.90% | 82.60% | 171 | 138 | 95.60% | 130.90% |
| Example 2-8 | $Li_2O_2$ | Additive (A2) | 0.28 | (B) of Fig. 2 | 1.70% | 90.30% | 174 | 146 | 97.70% | 128.90% |
| Example 2-9 | $Li_2O_2$ | Additive (A3) | 0.28 | (B) of Fig. 2 | 1.80% | 87.70% | 173 | 145 | 96.90% | 130.10% |
| Example 2-10 | $Li_2O_2$ | Additive (A4) | 0.28 | (B) of Fig. 2 | 1.70% | 87.30% | 169 | 144 | 96.10% | 128.10% |
| Example 2-11 | $Li_2O_2$ | Additive (A5) | 0.28 | (B) of Fig. 2 | 1.90% | 85.50% | 178 | 145 | 95.90% | 133.80% |

(continued)

| | Lithium supplement | Additive (A) | Additive (A): lithium supplement N2/(N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Example 2-12 | $Li_2O_2$ | Additive (A6) | 0.28 | (B) of Fig. 2 | 2.00% | 84.90% | 179 | 145 | 96.10% | 134.20% |

From the comparison of the above-mentioned comparative example 2-1 and blank example 1-1 and the comparison of each example and blank example 1-1, it can be seen that by including any of additives (A1) to (A6) into the separator of the secondary battery added with $Li_2O_2$ as the lithium supplement, it can not only reduce the thermal shrinkage of the separator and improve the working stability of the separator, but also improve the utilization efficiency of the lithium supplement, and improve the charge/discharge capacity, service life and overcharge prevention performance of the secondary battery.

Comparative example 3-1, and examples 3-1 - 3-7

Lithium supplement: $Li_2O$ {the corresponding general formula (I) is: m = 1, x1 = 2, and the rest are 0.}

Comparative Example 3-1

The secondary battery of comparative example 3-1 is obtained in the same steps as that of blank example 1-1, except that 3 mass% of $Li_2O$ (relative to the amount of $LiFePO_4$ as the positive active material) is further added into a solvent as a lithium supplement during the preparation of the positive electrode plate, fully stirred and evenly mixed.

Examples 3-1 - 3-7

The secondary battery of examples 3-1 - 3-7 is obtained in the same steps as that of example 1-1, except that $Li_2O$ is used as the lithium supplement instead, and the amount of the additive (A1) is adjusted to one that satisfies the corresponding (additive (A): lithium supplement) numerical values shown in table 3 to prepare the separator of each example.

The thermal shrinkage of the separator, the utilization efficiency of the lithium supplement, the charging and discharging specific capacity, the capacity retention test, and the overcharge failure SOC are tested for each comparative example and example, and the results are shown in table 3.

Comparative example 4-1, and examples 4-1 - 4-7

Lithium supplement: $Li_2Cu_{0.5}Ni_{0.5}O_2$ {the corresponding general formula (I) is: m = 1, x1 = 2, n = 1, y1 = y4 = 0.5, and the rest are 0. }

Comparative Example 4-1

The secondary battery of comparative example 4-1 is obtained in the same steps as that of blank example 1-1, except that 3 mass% of $Li_2Cu_{0.5}Ni_{0.5}O_2$ (relative to the amount of $LiFePO_4$ as the positive active material) is further added into a solvent as a lithium supplement during the preparation of the positive electrode plate, fully stirred and evenly mixed.

Examples 3-1 - 3-7

The secondary battery of examples 4-1 - 4-7 is obtained in the same steps as that of example 1-1, except that $Li_2Cu_{0.5}Ni_{0.5}O_2$ is used as the lithium supplement instead, and the amount of the additive (A1) is adjusted to one that satisfies the corresponding (additive (A): lithium supplement) numerical values shown in table 4 to prepare the separator of each example.

The thermal shrinkage of the separator, the utilization efficiency of the lithium supplement, the charging and discharging specific capacity, the capacity retention test, and the overcharge failure SOC are tested for each comparative example and example, and the results are shown in table 4.

[Table 3]

| | Lithium supplement | Additive (A) | Additive (A): lithium supplement N2/ (N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Blank example 1-1 | / | / | - | / | 3.50% | / | 156 | 140 | 90.1% | 117.70% |
| Comparative Example 3-1 | $Li_2O$ | / | - | / | 3.50% | 73.5% | 171 | 143 | 96.6% | 118.10% |
| Example 3-1 | LizO | Additive (Al) | 0.1 | (B) of Fig. 2 | 2.70% | 80.10% | 173 | 144 | 97.10% | 121.30% |
| Example 3-2 | $Li_2O$ | Additive (A1) | 0.27 | (B) of Fig. 2 | 2.00% | 88.70% | 178 | 146 | 97.80% | 127.50% |
| Example 3-3 | $Li_2O$ | Additive (A1) | 0.3 | (B) of Fig. 2 | 1.70% | 90.90% | 179 | 147 | 98.10% | 131.90% |
| Example 3-4 | $Li_2O$ | Additive (A1) | 0.35 | (B) of Fig. 2 | 1.60% | 89.40% | 177 | 146 | 97.50% | 132.10% |
| Example 3-5 | $Li_2O$ | Additive (A1) | 0.4 | (B) of Fig. 2 | 1.50% | 87.70% | 176 | 142 | 96.20% | 132.20% |
| Example 3-6 | LizO | Additive (A1) | 0.5 | (B) of Fig. 2 | 1.30% | 85.80% | 175 | 139 | 95.60% | 132.50% |
| Example 3-7 | $Li_2O$ | Additive (A1) | 1 | (B) of Fig. 2 | 1.00% | 82.10% | 173 | 132 | 93.40% | 132.90% |

[Table 4]

| | Lithium supplement | Additive (A) | Additive (A): lithium supplement N2/(N1 × m × x1) | Coating method | Thermal shrinkage of separator | Utilization efficiency of lithium supplement | Specific charge capacity (mAh/g) | Specific discharge capacity (mAh/g) | Capacity retention rate after storage at 60°C for 100 days | Overcharge failure SOC |
|---|---|---|---|---|---|---|---|---|---|---|
| Blank example 1-1 | / | / | - | / | 3.50% | / | 156 | 140 | 90.1% | 117.7 |
| Comparative Example 4-1 | $Li_2Cu_{0.5}Ni_{0.5}O_2$ | / | - | / | 3.50% | 71.8% | 160 | 142 | 93.2% | 119.3 |
| Example 4-1 | $Li_2Cu_{0.5}Ni_{0.5}O_2$ | Additive (A1) | 0.1 | (B) of Fig. 2 | 2.20% | 80.40% | 162 | 143 | 94.80% | 123.10% |
| Example 4-2 | $Li_2Cu_{0.5}Ni_{0.5}O_2$ | Additive (A1) | 0.27 | (B) of Fig. 2 | 1.80% | 86.20% | 165 | 145 | 96.00% | 130.90% |
| Example 4-3 | $Li_2Cu_{0.5}Ni_{0.5}O_2$ | Additive (A1) | 0.3 | (B) of Fig. 2 | 1.40% | 88.10% | 166 | 146 | 96.90% | 133.00% |
| Example 4-4 | $Li_2Cu_{0.5}Ni_{0.5}O_2$ | Additive (A1) | 0.35 | (B) of Fig. 2 | 1.30% | 86.70% | 165 | 144 | 96.40% | 133.40% |
| Example 4-5 | $Li_2Cu_{0.5}Ni_{0.5}O_2$ | Additive (A1) | 0.4 | (B) of Fig. 2 | 1.10% | 85.20% | 164 | 143 | 95.50% | 133.50% |
| Example 4-6 | $Li_2Cu_{0.5}Ni_{0.5}O_2$ | Additive (A1) | 0.5 | (B) of Fig. 2 | 0.90% | 84.00% | 163 | 141 | 95.00% | 133.90% |
| Example 4-7 | $Li_2Cu_{0.5}Ni_{0.5}O_2$ | Additive (A1) | 1 | (B) of Fig. 2 | 0.50% | 80.10% | 162 | 138 | 94.10% | 134.50% |

From the comparison of the above-mentioned comparative examples and blank example 1-1 in the tables 3 and 4 and the comparison between each example and blank example 1-1, it can be seen that by including any of additives (A1) to (A6) into the separator of the secondary battery added with $Li_2O$ or $Li_2Cu_{0.5}Ni_{0.5}O_2$ as the lithium supplement, it can not only reduce the thermal shrinkage of the separator and improve the working stability of the separator, but also improve the utilization efficiency of the lithium supplement, and improve the charge/discharge capacity, service life and overcharge prevention performance of the secondary battery.

In addition, it can be seen from the results of tables 1-4 that when the molar content N1 of the lithium supplement and the molar content N2 of the additive (A) satisfy $N2/(N1 \times m \times x1) \geq 0.27$, the effect of improving the utilization efficiency of the lithium supplement is higher, and the charge/discharge capacity, service life and overcharge prevention performance of the battery are also better; however, when $N2/(N1 \times m \times x1)$ exceeds 0.5, the effect of improving the utilization efficiency of the lithium supplement is obviously reduced. This is because when the additive (A) is relatively excessive, it may cause lithium precipitation on the surface of the negative electrode, which will deteriorate the direct-current resistance of the battery, thereby reducing the measured utilization efficiency of the lithium supplement.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A secondary battery, comprising

a positive electrode plate, a negative electrode plate, a separator, and an electrolyte solution,
the secondary battery contains a lithium supplement selected from at least one of the substances represented by the general formula (I) below,

$$mLi_{x1}O\cdot n(Ni_{y1}Mn_{y2}Co_{y3}Cu_{y4}Fe_{y5})O \qquad (I)$$

in general formula (I), $1 \leq x1 \leq 2$;
$0 \leq y1 \leq 1$; $0 \leq y2 \leq 1$; $0 \leq y3 \leq 1$; $0 \leq y4 \leq 2$; $0 \leq y5 \leq 1$;
$0.5 \leq y1 + y2 + y3 + y4 + y5 \leq 1$;
$1 \leq m \leq 3$; $0 \leq n/m \leq 1$,
and the separator comprises a separator substrate and an additive (A),
the additive (A) is selected from any one or two or more of nitrone derivatives having a structure represented by the formula (II) below in the molecule, or/and piperidine derivatives having a structure represented by the formula (III) below in the molecule,

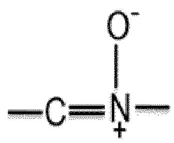

(II)

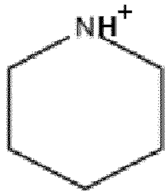

(III).

2. The secondary battery according to claim 1, wherein

the molar content N1 of the lithium supplement and the molar content N2 of the additive (A) satisfy the following relational expression: $0.1 \leq N2/(N1 \times m \times x1) \leq 0.5$;
optionally, N1 and N2 satisfy the following relational expression: $0.27 \leq N2/(N1 \times m \times x1) \leq 0.35$.

**3.** The secondary battery according to claim 1 or 2, wherein
the lithium supplement is selected from at least one of $Li_2O$, $Li_2O_2$, $Li_5FeO_4$, and $Li_2Cu_{0.5}Ni_{0.5}O_2$; optionally, the lithium supplement is selected from at least one of $Li_2O$ and $Li_2O_2$.

**4.** The secondary battery according to any one of claims 1-3, wherein

the nitrone derivatives are compounds represented by the general formula (II') below, or cyclic nitrone derivatives with 4-8 membered rings,

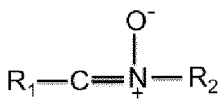

(II')

in formula (II'), $R_1$ and $R_2$ are each independently selected from at least one of methyl, ethyl, propyl, isopropyl, butyl, isobutyl, tert-butyl, fluoromethyl, fluoroethyl, fluoropropyl, methylhydroxy, ethylhydroxy, phenyl, tolyl, fluorophenyl, methoxy, and ethoxy, 1,1-dimethyl-ethanol group, 1,1-dimethyl-propanol group, 1,1-dimethyl-butanol group, 1-methyl-propanol group and tert-butyl triol group.

**5.** The secondary battery according to any one of claims 1-4, wherein
the additive (A) is selected from at least one of N-tert-butyl-α-phenylnitrone, N-tert-butyl-α-4-fluorophenylnitrone, 5,5-dimethyl-1-pyrroline oxide, N-tert-butyl-α-methylnitrone, 2,2,6,6-tetramethylpiperidine oxide, and 4-ethoxy-2,2,6,6-tetramethylpiperidine 1-oxide.

**6.** The secondary battery according to any one of claims 1-5, wherein
the specific surface area of the lithium supplement is 0.5 $m^2/g$ - 20$m^2/g$, optionally 1 $m^2/g$ - 2 $m^2/g$.

**7.** The secondary battery according to any one of claims 1-6, wherein
the additive (A) is coated on at least one side of the separator substrate close to the positive electrode, and optionally, the additive (A) is coated on both sides of the separator substrate.

**8.** The secondary battery according to any one of claims 1-7, wherein
the lithium supplement is added to a positive electrode material on the positive electrode plate.

**9.** The secondary battery according to any one of claims 1-8, wherein
the additive (A) is mixed with nano-alumina and then coated on the separator substrate.

**10.** The secondary battery according to any one of claims 1-9, wherein
the lithium supplement is coated on at least one side of the separator substrate close to the positive electrode, and optionally, the lithium supplement is coated on both sides of the separator substrate.

**11.** The secondary battery according to claim 10, wherein
the additive (A) is mixed with the lithium supplement and then coated on the separator substrate.

**12.** The secondary battery according to claim 10, wherein
the lithium supplement is coated on the separator substrate to form a lithium supplement layer, and then the additive (A) is coated on the lithium supplement layer.

**13.** The secondary battery according to any one of claims 1-12, wherein
the purity of the lithium supplement is greater than or equal to 90%; optionally, greater than or equal to 95%.

**14.** The secondary battery according to any one of claims 1-13, wherein
the first delithiation capacity of the lithium supplement is 300 - 1500 mAh/g, optionally 400 - 900 mAh/g.

**15.** The secondary battery according to any one of claims 1-14, wherein the first charging and discharging voltage range of the lithium supplement is 2.0 V - 4.5 V, optionally3.0 V - 3.75 V.

**16.** The secondary battery according to any one of claims 1-15, wherein

the separator substrate is formed from materials selected from one or more combinations of a polyolefin film, a polyester film, a cellulose film, a polyimide film, a non-woven separator, and a polyimide thin film,
optionally a polyethylene thin film, a polypropylene thin film, a polyethylene terephthalate film, a cellulose film, a polyimide film, a non-woven separator and a polyimide thin film,
further optionally a polypropylene thin film.

**17.** The secondary battery according to any one of claims 1-16, wherein the thickness of the separator is 3 μm-20 μm, optionally 9 μm-16 μm.

**18.** A battery module, **characterized by** comprising a secondary battery according to any one of claims 1-17.

**19.** A battery pack, **characterized by** comprising a battery module according to claim 18.

**20.** A power consuming device, **characterized by** comprising at least one selected from a secondary battery according to any one of claims 1-17, a battery module according to claim 18, or a battery pack according to claim 19.

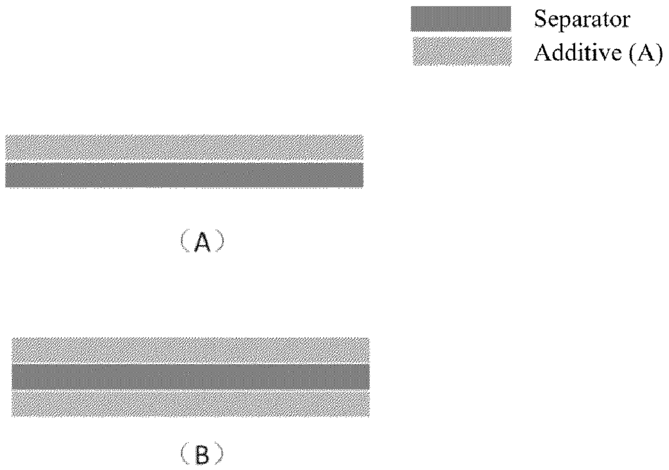

*FIG. 1*

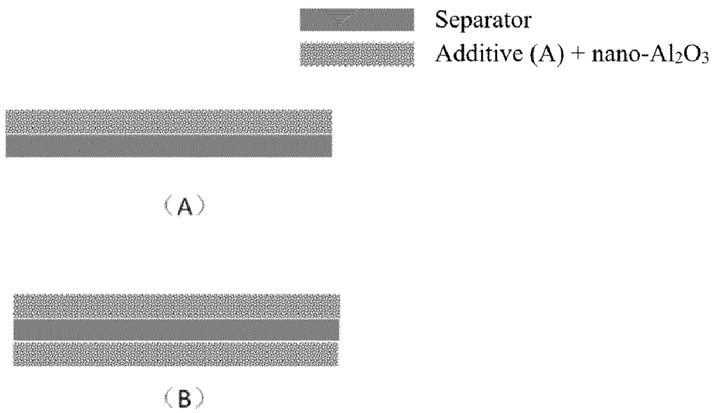

*FIG. 2*

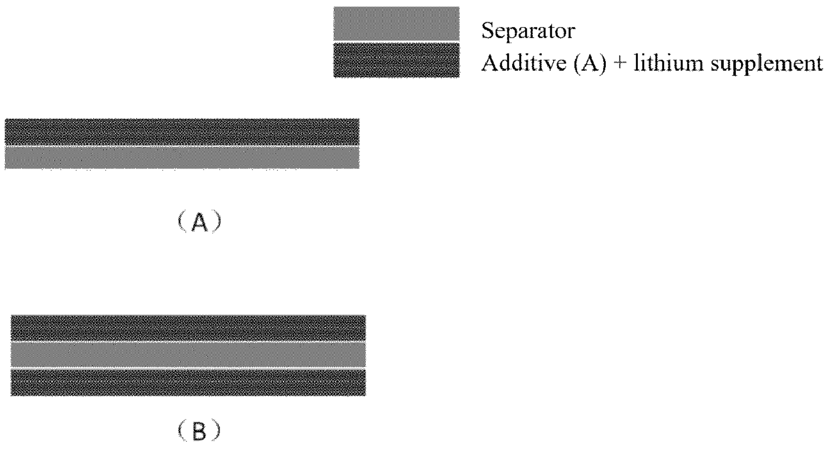
Separator
Additive (A) + lithium supplement
(A)
(B)

*FIG. 3*

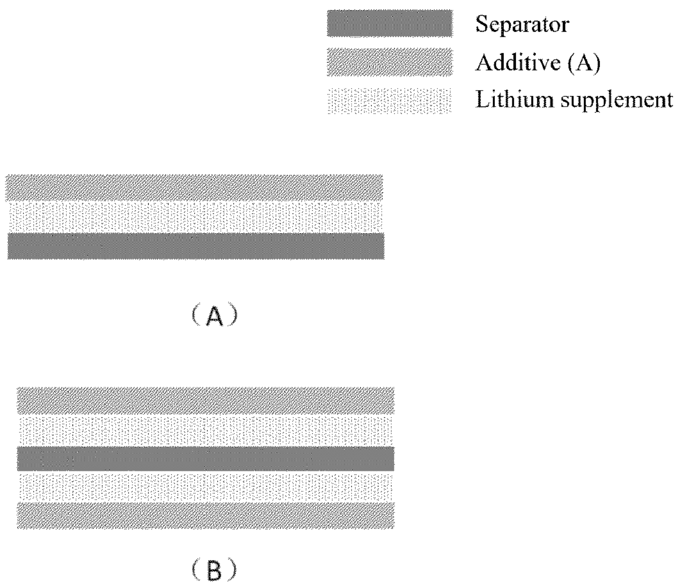
Separator
Additive (A)
Lithium supplement
(A)
(B)

*FIG. 4*

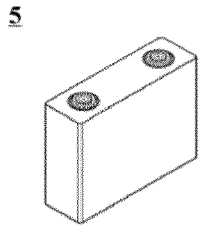


FIG. 5

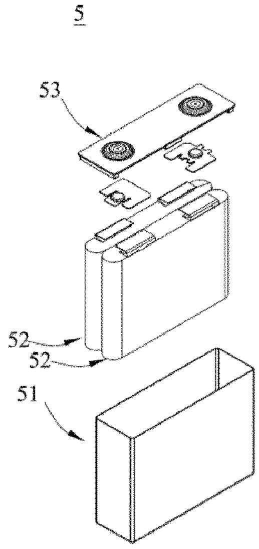


FIG. 6

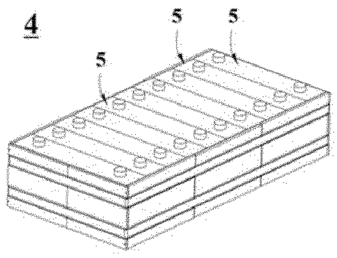


FIG. 7

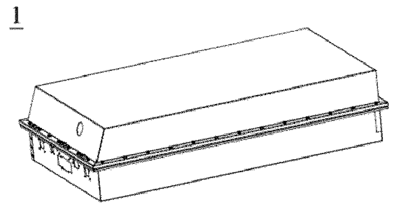


FIG. 8

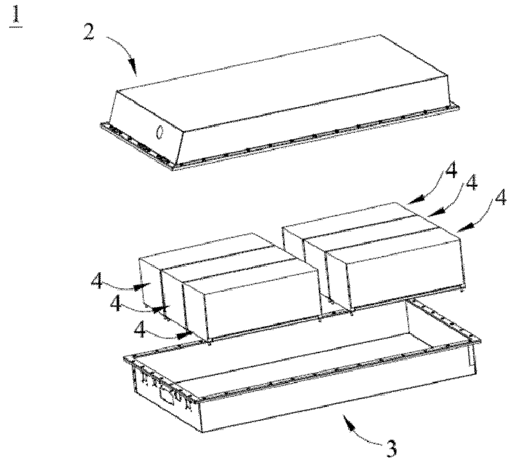


FIG. 9

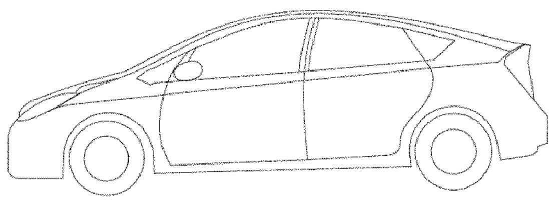

FIG. 10

## INTERNATIONAL SEARCH REPORT

International application No.
PCT/CN2022/072744

**A. CLASSIFICATION OF SUBJECT MATTER**

H01M 10/0525(2010.01)i; H01M 10/42(2006.01)i; H01M 50/449(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 补锂, 隔膜, 哌啶, 硝酮, $Li_2O$, $Li_2O_2$, $Li_5FeO_4$, lithium, battery, supplement, complementary, separator, diaphragm, piperidine, nitrone

**C. DOCUMENTS CONSIDERED TO BE RELEVANT**

| Category* | Citation of document, with indication, where appropriate, of the relevant passages | Relevant to claim No. |
|---|---|---|
| Y | CN 113506952 A (ZHUHAI COSMX BATTERY CO., LTD.) 15 October 2021 (2021-10-15) description, paragraphs 27-62, and figures 1-2 | 1, 3-20 |
| Y | CN 111725575 A (KUNSHAN BAOCHUANG NEW ENERGY TECHNOLOGY CO., LTD.) 29 September 2020 (2020-09-29) description, paragraphs 22-36 | 1, 3-20 |
| Y | CN 113078417 A (TIANJIN EV ENERGIES CO., LTD.) 06 July 2021 (2021-07-06) description, paragraphs 6-21, and figures 1-2 | 1, 3-20 |
| Y | JP 2001210314 A (DENSO CORP. et al.) 03 August 2001 (2001-08-03) description, paragraphs 10-43 | 1, 3-20 |
| Y | CN 110197887 A (BYD CO., LTD.) 03 September 2019 (2019-09-03) description, paragraphs 4-23 | 1, 3-20 |
| Y | CN 113036106 A (KUNSHAN BAOCHUANG NEW ENERGY TECHNOLOGY CO., LTD.) 25 June 2021 (2021-06-25) description, paragraphs 7-42 | 1, 3-20 |
| A | US 10096835 B2 (COMMISSARIAT À L'ÉNERGIE ATOMIQUE ET AUX ÉNERGIES ALTERNATIVES) 09 October 2018 (2018-10-09) entire document | 1-20 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 September 2022** | **10 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/072744**

| Patent document cited in search report | | | Publication date (day/month/year) | Patent family member(s) | | | Publication date (day/month/year) |
|---|---|---|---|---|---|---|---|
| CN | 113506952 | A | 15 October 2021 | None | | | |
| CN | 111725575 | A | 29 September 2020 | None | | | |
| CN | 113078417 | A | 06 July 2021 | None | | | |
| JP | 2001210314 | A | 03 August 2001 | None | | | |
| CN | 110197887 | A | 03 September 2019 | None | | | |
| CN | 113036106 | A | 25 June 2021 | None | | | |
| US | 10096835 | B2 | 09 October 2018 | EP | 3190649 | A1 | 12 July 2017 |
| | | | | US | 2017200953 | A1 | 13 July 2017 |
| | | | | FR | 3046699 | A1 | 14 July 2017 |

Form PCT/ISA/210 (patent family annex) (January 2015)